**Europäisches Patentamt**

**European Patent Office**

**Office européen des brevets**

(11) Numéro de publication : **0 395 525 B1**

(12) **FASCICULE DE BREVET EUROPEEN**

(45) Date de publication du fascicule du brevet :
01.09.93 Bulletin 93/35

(51) Int. Cl.⁵ : **B65B 25/06, B65D 85/76**

(21) Numéro de dépôt : **90401145.9**

(22) Date de dépôt : **26.04.90**

(54) **Procédé de fabrication de produits alimentaires pâteux et produits obtenus par ce procédé.**

(30) Priorité : **28.04.89 FR 8905706**

(43) Date de publication de la demande :
**31.10.90 Bulletin 90/44**

(45) Mention de la délivrance du brevet :
**01.09.93 Bulletin 93/35**

(84) Etats contractants désignés :
**AT BE CH DE DK ES FR GB GR IT LI LU NL SE**

(56) Documents cités :
**DE-A- 3 708 839**
**DE-A- 3 708 839**
**FR-A- 2 450 065**

(73) Titulaire : **FROMAGERIES BEL**
**4, rue d'Anjou**
**F-75008 Paris (FR)**

(72) Inventeur : **Schoegel, Francine**
**1,rue Sebile**
**F-39000 Long le Saunier (FR)**
Inventeur : **Daurelles, Jacques**
**Les Toupes Montain**
**F-39210 Voiteur (FR)**

(74) Mandataire : **Le Guen, Gérard et al**
**CABINET LAVOIX 2, place d'Estienne d'Orves**
**F-75441 Paris Cédex 09 (FR)**

## Description

La présente invention concerne l'industrie alimentaire et plus particulièrement l'industrie fromagère.

Elle concerne plus spécifiquement un procédé de fabrication de produits alimentaires décorés et, en particulier, des fromages et spécialités fromagères fondus décorés. Elle concerne également les produits obtenus selon le procédé.

Il est connu de fabriquer de nombreux produits alimentaires décorés tels que des confiseries ou gâteaux, mais également des fromages tels que les fromages fondus ou des spécialités fromagères fondues décorés avec des éléments figurés.

Dans la présente invention, on entendra par fromages ou spécialités fromagères fondus, tout produit qui sera préparé par la fonte de fromages, de caillés lactiques, de concentrés protéiques laitiers, de lactosérum, de lait en l'état ou en poudre, entier ou écrémé, de beurre ou tout autre matière grasse d'origine laitière ou végétale en présence ou non de sels de fonte. Ces produits peuvent contenir éventuellement des stabilisants et/ou des émulsifiants.

De la même façon et pour la présente invention, on entendra par éléments figurés individuels utilisés pour la décoration, des éléments (habituellement utilisés pour la décoration de tels produits) tels que des cerneaux de noix, des amandes, des noisettes, des raisins, des morceaux de fruits ou de légumes ou tout autre élément dont le contour irrégulier ne permet pas la réalisation d'un lit compact quand lesdits éléments sont placés côte à côte dans le fond et/ou sur les parois d'un emballage.

Les produits à base de fromage connus de l'état de la technique se présentent sous forme d'une pâte fromagère fondue et refroidie sur laquelle on a disposé des éléments décoratifs tels que des fruits secs, plus particulièrement des noix. Ces éléments sont disposés soit sur l'ensemble de la superficie du produit, soit plus particulièrement sur les faces supérieures ou sur les faces latérales, ou sur les faces supérieures et latérales. Ils sont en outre disposés de façon relativement ordonnée et peuvent recouvrir partiellement ou totalement la surface sur laquelle ils se trouvent.

Ces produits sont fabriqués habituellement selon un procédé en deux étapes, consistant à couler à chaud une pâte fromagère fondue fabriquée selon les procédés traditionnels, dans un moule qui a la forme du produit final désiré, puis à décorer manuellement le produit obtenu préalablement refroidi et démoulé avec les éléments décoratifs et le conditionner.

Ce procédé présente des inconvénients qui sont, d'une part les risques bactériologiques entraînés par la manipulation à froid (contamination par l'air, par les mains du personnel) et d'autre part, les coûts de production importants dûs à la succession d'étapes et à la nécessité de recourir à un personnel nombreux pour réaliser manuellement le décor.

On a déjà essayé de résoudre ces problèmes et on a décrit des procédés qui éliminent les inconvénients évoqués ci-dessus; on peut citer notamment la fabrication de produits décorés, par exemple selon DE-A-3708839 qui décrit un procédé qui évite la manipulation à froid pour réaliser la décoration de la superficie partielle ou totale des produits. Le procédé consiste ainsi à préparer et à conditionner un produit fromager en plusieurs étapes : dans une première étape on dispose les éléments décoratifs dans un évidement de l'emballage prévu à cet effet et, dans une deuxième étape, on remplit l'emballage avec une préparation de fromage blanc ou de fromage fondu. Toutefois, dans le procédé connu l'élément décoratif est constitué par un lit homogène et compact d'éléments tels que des herbes aromatiques : fines herbes, herbes de Provence, etc.

En conséquence, au moment du remplissage, le produit vient s'étaler sur ce lit d'herbes et il n'y a aucun risque du fait de la continuité du lit, que le produit, quelque soit sa viscosité au moment de la coulée, traverse le lit compact d'éléments décoratifs, et vienne s'immiscer entre ceux-ci et l'emballage et recouvrir ces éléments décoratifs, les cachant ainsi à la vue du consommateur.

Toutefois, il n'en n'est pas de même quand les éléments décoratifs sont constitués par des éléments figurés individuels; ces derniers, placés dans l'emballage définitif, laissent entre eux, du fait de leur contour irrégulier, des interstices qui peuvent être plus ou moins importants selon l'irrégularité de leur contour et le motif du décor à réaliser.

Dans ce dernier cas, le produit au moment de la coulée s'étale dans les interstices entre les éléments pour venir recouvrir la totalité de la superficie des éléments individuels, cachant ainsi ces derniers à la vue du consommateur, ce qui élimine bien évidemment tout l'aspect attractif du produit et va à l'encontre du but recherché.

Le procédé selon l'invention permet de résoudre ce problème, tout en conservant l'avantage d'éliminer tout risque bactériologique entraîné par la manipulation à froid des produits dans la réalisation de décors fait avec des éléments individuels de conformation irrégulière.

A cet effet, la présente invention permet, par la sélection d'une viscosité adaptée du produit au moment de la coulée dans l'emballage, d'éviter de façon inattendue le recouvrement des éléments figurés par le produit et laisse ces derniers apparents à la superficie du produit.

De façon tout aussi surprenante, la sélection de la viscosité au moment de la coulée confère également au produit fini refoidi une texture telle qu'au moment de la consommation celui-ci est parfaitement démoulable sans qu'on ait recours à des artifices habituellement utilisés à cet effet, soit au moment de la fabrication du produit (ajout d'agents gélifiants dans la pâte), du conditionnement (vaporisation d'agents de démoulage sur les parois internes de l'emballage) ou après conditionnement : passage de l'emballage plein sous l'eau chaude, ou tout autre moyen adapté, etc.

Le but de la présente invention est donc de proposer un procédé de fabrication de produits alimentaires décorés qui évite les inconvénients des procédés de l'art antérieur tout en évitant le recouvrement d'éléments décoratifs individuels à contour irrégulier préalablement disposés dans l'emballage.

A cet effet, la présente invention a pour objet un procédé de fabrication de produits alimentaires pâteux décorés sur tout ou partie de leur surface avec des éléments figurés individuels de conformation irrégulière, au cours duquel on prépare à chaud au moins une pâte et on coule directement dans l'emballage, dans lequel on a préalablement disposé lesdits éléments figurés la ou les pâte(s) à une température comprise entre 60 et 90°C, la ou les pâte(s) ayant une viscosité comprise entre 1 et 10 Pa.s, mesurée à 75°C.

La fermeture de l'emballage est assuré de préférence au moyen d'un opercule.

En outre, il est particulièrement avantageux de réaliser la coulée et la fermeture de l'emballage sous atmosphère d'azote ou de gaz neutre pour permettre une meilleure conservation du produit.

La présente invention a en outre pour objet des produits alimentaires pâteux obtenus par le procédé selon l'invention.

La pâte constituant le produit pâteux est préférentiellement une pâte fromagère fondue, le décor étant constitué de cerneaux de noix.

Le procédé selon l'invention comprend dans une première étape la préparation des pâtes par mélange des différents ingrédients et additifs. La pâte est ensuite chauffée de manière à obtenir une viscosité convenable pour la coulée dans l'emballage. La viscosité du produit est mesurée à 75°C avec un appareil de type RHEOMAT 30 réglé à une vitesse de 350 t/min. La pâte fondue chaude est alors transférée dans une trémie. Dans l'étape suivante, les pâtes sont coulées à chaud directement dans l'emballage au moyen de becs doseurs de coulée traditionnels. Les éléments décoratifs sont placés sur le fond de l'emballage; des portions en saillie formant logement sont éventuellement prévues dans l'emballage pour faciliter la mise en place des éléments figurés décoratifs.

Afin que les éléments figurés décoratifs ne soient pas recouverts par la pâte fondue chaude tout au long du cycle, il est souhaitable que la viscosité des pâtes, la vitesse de coulée et la vitesse de refroidissement soient adaptées à la nature du produit que l'on veut fabriquer.

La viscosité a également un rôle sur la consistance finale du produit et son aptitude à être démoulé.

En effet, il faut que le produit ne soit, ni trop ferme pour garder la consistance d'un fondu, ni trop collant pour être facilement démoulable. Cette consistance finale nécessaire à une bonne démoulabilité du produit peut être caractérisée par des mesures de texture exprimées en termes :

. de dureté de la pâte à froid qui doit être comprise entre 30 et 60 g mesurée à l'aide d'un appareil de type INSTRON après refroidissement du produit à 20°C,

. d'élasticité (rapport de mesure obtenue pour la force finale/la force maximale) qui est exprimée en pourcentage et doit être comprise entre 15 et 40%. Les valeurs des forces sont mesurées à l'aide d'un appareil INSTRON après refroidissement du produit à 20°C.

La méthode de mesure utilisée pour mesurer la dureté et l'élasticité de la pâte à l'aide de l'appareil INSTRON est la suivante :

Un cylindre de diamètre 6,35 mm relié à un capteur de force est enfoncé dans la pâte à une vitesse constante de 12 mm/min jusqu'à une profondeur de 7 mm calculée par rapport à la surface du produit.

Dès que le cylindre a atteint cette profondeur, il est maintenu immobile pendant 2 minutes.

La dureté et l'élasticité sont obtenues à l'aide des paramètres suivants :

- la force de résistance à la pénétration qui est mesurée au cours de la phase de pénétration elle-même et au cours de la phase immobile ;
- la force maximale et la force finale qui sont relevées sur la courbe force de résistance/temps.

La force maximale exprimée en grammes donne la dureté de la pâte.

Le rapport de la force finale sur la force maximale multipliée par 100 donne l'élasticité de la pâte (exprimée en pourcentage).

La température doit être également choisie de manière à être compatible avec le matériau utilisé pour l'emballage. Elle ne doit pas être trop élevée, sinon de la buée se formerait dans l'emballage, ce qui serait préjudiciable à la visibilité du décor.

Elle doit toutefois être suffisamment élevée pour éliminer au maximum les risques bactériologiques.

La température de coulée sera variable en fonction du type du produit que l'on veut réaliser, mais sera comprise entre 60 et 90°C, de préférence entre 70°C et 80°C, car de cette température dépend l'obtention d'une viscosité adéquate comprise entre 1 et 10 pa.s.

La vitesse de coulée doit être régulière en fonction du type de produit. Elle doit être assez lente pour éviter le déplacement des éléments décoratifs dans l'emballage.

Le temps nécessaire à la coulée d'un produit de 200 g formé de pâte fromagère et décoré de cerneaux de noix sera compris entre 1 et 4 secondes.

La coulée doit être réalisée de telle façon que l'on obtienne une surface plane pour permettre un bon operculage. La coulée et l'operculage sont réalisés de façon préférable sous atmosphère d'azote ou de gaz neutre.

La pose de l'opercule sur la pâte fondue chaude assure une pasteurisation de ce dernier.

L'emballage rempli et operculé est ensuite retourné lentement pour éviter que les éléments décoratifs ne bougent et que la pâte fondue encore chaude ne pénètre sous les éléments décoratifs.

L'emballage et son contenant sont alors refroidis, de préférence à température ordinaire pendant un temps pouvant aller jusqu'à 24 heures. Le temps de refroidissement est adapté à la nature du produit et des éléments figurés. Si les éléments figurés sont par exemple des cerneaux de noix, le refroidissement devra être assez rapide pour éviter le noircissement de ces derniers.

La conformation et le matériau de constitution de l'emballage sont également importants.

L'emballage est de préférence réalisée en un matériau transparent pour permettre de visualiser le décor créé par les éléments figurés qui pourront être avantageusement des cerneaux de noix.

Il est évident que le matériau doit être de qualité barrière à l'environnement pour assurer une bonne conservation du produit, assez rigide pour permettre le démoulage mais pas trop rigide pour être déformable et faciliter la démoulabilité des produits.

L'opercule est avantageusement constitué d'un matériau scellable à chaud.

Le choix d'un emballage ayant une conformation adéquate favorisera le démoulage du produit et la bonne tenue des éléments figurés.

Ainsi, la présence d'une dépouille et de formes anguleuses est particulièrement avantageuse de même que des encoches ou portions en saillie pour le logement des éléments décoratifs qui assureront leur maintien tout au long du cycle de fabrication.

Les éléments décoratifs peuvent être tout élément habituellement utilisé pour la décoration des produits alimentaires et des fromages ou spécialités fondues, tel que des cerneaux de noix, des amandes, des raisins secs, des morceaux de fruits ou légumes, etc...

Pour des pâtes constituées par des pâtes fromagères fondues, l'extrait-sec des produits sera de préférence l'extrait-sec habituel d'un fromage fondu; ce dernier pourra être fabriqué à partir des matières premières habituellement utilisées en fonte tels que des fromages à pâte pressée, à pâte molle, des caillés frais, des concentrés protéiques laitiers ou non laiters, des matières grasses d'origine animale ou végétale, des poudres de lait ou de lactosérum, etc...

On peut également utiliser cette technique dans le cadre de la préparation de fromages ou spécialités fromagères traités par thermisation préparés à partir de caillés frais et/ou de concentrés protéiques laitiers ou non laitiers; on peut citer par exemple des fromages blancs type "cream-cheese".

Les pâtes mises en oeuvre pourront contenir des additifs tels que des colorants, des petites particules, par exemple, d'épices ou d'aromates ou encore des éléments figurés, tels que des morceaux de fruits, par exemple des noix, noisettes, raisins, etc...

L'invention s'applique à tous formats de produits; cylindre, bûche, parallélépipède, cube, etc...

En outre, la dimension des produits peut être variable et aller de la portion de 20 g décorée à des barres de 50 g pour "en cas" ou sandwiches, des formats préemballés de 100 à 300 g et des formats à la coupe de 1-2 kg.

La présente invention, tout en évitant les inconvénients des techniques de l'art antérieur, notamment la manipulation à froid du produit et les risques bactériologiques inhérents, permet de réaliser de façon avantageuse des fromages ou spécialités fromagères décorées avec des éléments figurés de conformation irrégulière.

La réalisation de produits selon l'invention permet également de réduire de façon significative les coûts d'obtention de tels produits et d'augmenter significativement leur productivité.

L'invention sera illustrée par les exemples suivants donnés à titre indicatif et non limitatif.

EXEMPLE 1

On prépare un mélange A qui a la composition suivante :
Cheddar                          55,5 %

| | |
|---|---|
| Beurre | 7 % |
| Sels de fonte | 2 % |
| NaCl | 0,5 % |
| Morceaux de noix inclus | 5 % |
| $H_2O$      QSP | 100% |

de façon à obtenir après fusion à 100°C un mélange qui a les caractéristiques suivantes :

```
Extrait sec (ES)                    48 %

Matières grasses/Extrait sec (MG/ES)  55 %

Viscosité de la pâte à la coulée      5 Pa.s à 75°C

(mesurée à l'aide d'un appareil

RHEOMAT 30 réglé à une vitesse de

359 t/min.)
```

Le mélange A est coulé directement dans une coque plastique rigide en matériau transparent dans lequelle ont été disposés préalablement les cerneaux de noix dans des portions en saillie prévues à cet effet. La vitesse de dosage est réglée de façon à amener progressivement le mélange sur les noix sans les déplacer ; le débit est réglé pour délivrer 400 g de produit en 3 secondes.

A la fin de la coulée, l'emballage contenant le produit est operculé puis retourné avec soin pour éviter le déplacement des éléments figurés, et mis à refroidir avant commercialisation.

Après 24 heures, les caractéristiques de la texture mesurées à 20°C à l'aide d'un appareil INSTRON sont les suivantes :

| | |
|---|---|
| dureté | 50 g |
| élasticité | 35 % |

EXEMPLE 2

On prépare un mélange B à partir de caillé frais enrichi en crème et stabilisé par l'addition d'hydrocolloïdes (gomme de guar et d'amidon) ayant la composition suivante :

| | |
|---|---|
| Caillé frais | 40 % |
| Crème | 15 % |
| Hydrocolloïdes | 1 % |
| NaCl | 0,5 % |
| Poudre de lait | 10 % |
| $H_2O$      QSP | 100 % |

de façon à obtenir après traitement thermique à 80°C un produit ayant :

| | |
|---|---|
| ES | 40 % |
| MG/ES | 60 % |
| Viscosité de la pâte | 4 pa.s à 75 °C |

(mesurée dans des conditions identiques à celles de l'exemple 1.)

On dispose préalablement dans la logette prévue au fond d'une coque individuelle transparente une amande et on coule 20 g de produit B à 70°C dans cet emballage.

On ferme au moyen d'un opercule constitué d'un film permettant d'assurer une étanchéité parfaite. On retourne et refroidit rapidement le produit. On pourra alors regrouper ces produits par 10 dans une boîte présentoir.

Au moment de la consommation, le produit sera extrait par pelage de l'opercule et simple pression de la coque.

Les caractéristiques rhéologiques du produit, mesurées sur le produit refroidi à 20°C, selon les conditions opératoires de l'exemple 1, sont les suivants :

| | |
|---|---|
| dureté | 45 g |
| élasticité | 30 % |

**Revendications**

1. Procédé de fabrication de produits alimentaires pâteux décorés sur tout ou partie de leur surface avec des éléments figurés individuels de conformation irrégulière, au cours duquel on prépare à chaud au moins une pâte et on coule directement dans l'emballage, dans lequel on a préalablement disposé lesdits éléments figurés la ou les pâte(s) à une température comprise entre 60 et 90°C, la ou les pâte(s) ayant une viscosité comprise entre 1 et 10 Pa.s, mesurée à 75°C.

2. Procédé de fabrication de produits alimentaires pâteux décorés selon la revendication 1, caractérisé en ce que la dureté du produit après refroidissement est comprise entre 30 et 60 g, mesurée à 20°C à l'aide d'un appareil INSTRON.

3. Procédé de fabrication de produits alimentaires pâteux décorés selon la revendication 1, caractérisé en ce que l'élasticité du produit après refroidissement est comprise entre 15 et 40 %, mesurée à 20°C à l'aide d'un appareil INSTRON.

4. Procédé de fabrication de produits alimentaires pâteux décorés selon les revendications 1 à 3, caractérisé en ce que après la fin de la coulée, on ferme l'emballage, on retourne immédiatement le produit et on refroidit ce dernier en un temps compris entre quelques minutes et 24 heures.

5. Procédé de fabrication de produits alimentaires pâteux selon les revendications 1 à 4, caractérisé en ce que l'on ferme l'emballage au moyen d'un opercule.

6. Procédé selon l'une quelconque des revendications précédentes, caractérisé en ce que la coulée et la fermeture de l'emballage sont réalisées sous atmosphère d'azote ou de gaz neutre pour permettre une meilleure conservation produit.

7. Procédé de fabrication de Produits alimentaires pâteux selon l'une quelconque des revendications 1 à 6, caractérisés en ce que la pâte est constituée de pâte fromagère fondue.

8. Produits alimentaires pâteux obtenus selon l'une quelconque des revendications 1 à 6, caractérisés en ce que la pâte est constituée d'une pâte fromagère et les éléments figurés de cerneaux de noix.

**Patentansprüche**

1. Verfahren zur Herstellung von teigartigen Nahrungsmitteln, deren Oberfläche ganz oder teilweise mit individuellen Figurenelementen unregelmäßiger Form verziert ist, wobei in der Wärme wenigstens ein Teig hergestellt wird, und der oder die Teig(e) bei einer Temperatur zwischen 60 und 90°C in die Verpackung gegossen wird, die vorher mit den Figurenelementen versehen wurde, wobei der oder die Teig(e) eine Viskosität zwischen 1 und 10 Pa·s, gemessen bei 75°C, aufweisen.

2. Verfahren zur Herstellung verzierter teigartiger Nahrungsmittol nach Anspruch 1, dadurch gekennzeichnet, daß die Härte des Produkts nach dem Abkühlen zwischen 30 und 60 g liegt, gemessen bei 20°C mit Hilfe eines INSTRON-Geräts.

3. Verfahren zur Herstellung verzierter teigartiger Nahrungsmittel nach Anspruch 1, dadurch gekennzeichnet daß die Elastizität des Produkts nach dem Abkühlen zwischen 15 und 40% liegt, gemessen bei 20°C mit Hilfe eines INSTRON-Geräts.

4. Verfahren zur Herstellung verzierter teigartiger Nahrungsmittel nach den Ansprüchen 1 bis 3, dadurch gekennzeichnet, daß nach Beendigung des Gießens die Verpackung geschlossen, das Produkt sofort umgedreht und letzteres in einer Zeit zwischen einigen Minuten und 24 h abgekühlt wird.

5. Verfahren zur Herstellung verzierter teigartiger Nahrungsmittel nach den Ansprüchen 1 bis 4, dadurch gekennzeichnet, daß die Verpackung mit wenigstens einem Deckel verschlossen wird.

6. Verfahren nach irgendeinem der vorstehenden Ansprüche, dadurch gekennzeichnet, daß das Gießen und das Verschließen der Verpackung unter einer Atmosphäre aus Stickstoff oder eines neutralen Gases durchgeführt wird, um eine bessere Konservierung des Produkts zu ermöglichen.

**7.** Verfahren zur Herstellung teigartiger Nahrungsmittel nach irgendeinem der Ansprüche 1 bis 6, dadurch gekennzeichnet, daß der Teig aus flüssigem Käseteig besteht.

**8.** Teigartige Nahrungsmitelprodukte, erhalten nach irgendeinem der Ansprüche 1 bis 6, dadurch gekennzeichnet, daß der Teig aus Käseteig besteht und die Figurenelemente aus halbreifen Nußkernen bestehen.

## Claims

**1.** Process for the manufacture of pasty food products decorated over all or part of their surface with individual figured elements of irregular shape, during which process at least one paste is prepared hot and the paste(s) is (are) poured at a temperature between 60 and 90°C directly into the packaging in which the said figured elements have been previously arranged, the paste(s) having a viscosity of between 1 and 10 Pa.s measured at 75°C.

**2.** Process for the manufacture of decorated pasty food products according to claim 1, characterised in that the hardness of the product after cooling is between 30 and 60 g, measured at 20°C with the aid of an INSTRON apparatus.

**3.** Process for the manufacture of decorated pasty food products according to claim 1, characterised in that the elasticity of the product after cooling is between 15 and 40%, measured at 20°C with the aid of an INSTRON apparatus.

**4.** Process for the manufacture of decorated pastry food products according to claims 1 to 3, characterised in that, after the completion of pouring, the packaging is closed, the product is turned over immediately and then cooled for a period of time between a few minutes and 24 hours.

**5.** Process for the manufacture of decorated pastry food products according to claims 1 to 4, characterised in that the packaging is closed by means of a cap.

**6.** Process according to any one of the preceding claims, characterised in that the pouring and the closure of the packaging are carried out in a nitrogen or neutral gas atmosphere in order to enable better preservation of the product.

**7.** Process for the manufacture of pasty food products according to any one of claims 1 to 6, characterised in that the paste is constituted by melted cheese paste.

**8.** Pastry food products obtained according to any one of claims 1 to 6, characterised in that the paste is constituted by a cheese paste and the figured elements are constituted by walnuts.